(19) Europäisches Patentamt
European Patent Office
Office européen des brevets

(11) EP 0 356 226 B1

# (12) EUROPEAN PATENT SPECIFICATION

(45) Date of publication and mention of the grant of the patent:
**02.11.2000 Bulletin 2000/44**

(51) Int. Cl.[7]: **C08G 63/60**, C08G 63/685, C08G 69/44

(21) Application number: **89308559.7**

(22) Date of filing: **23.08.1989**

(54) **Aromatic polyester, aromatic polyester-amide and processes for producing the same**

Aromatische Polyester, aromatische Polyesteramide und Verfahren zu deren Herstellung

Polyesters aromatiques; polyester-amides aromatiques et procédé pour leur préparation

(84) Designated Contracting States:
**DE FR GB**

(30) Priority: **24.08.1988 JP 21015588**
**11.10.1988 JP 25559088**
**09.05.1989 JP 11582989**

(43) Date of publication of application:
**28.02.1990 Bulletin 1990/09**

(73) Proprietor:
**MITSUBISHI CHEMICAL CORPORATION**
**Chiyoda-ku Tokyo (JP)**

(72) Inventors:
- **Kishiro, Osamu**
  **Atsugi-shi Kanagawa-ken (JP)**
- **Kamata, Hiroshi**
  **Yokohama-shi Kanagawa-ken (JP)**
- **Sakai, Hideko**
  **Setagaya-ku Tokyo (JP)**

(74) Representative:
**Woods, Geoffrey Corlett et al**
**J.A. KEMP & CO.**
**Gray's Inn**
**14 South Square**
**London WC1R 5LX (GB)**

(56) References cited:

| | |
|---|---|
| **EP-A- 0 063 881** | **EP-A- 0 220 737** |
| **EP-A- 0 226 839** | **EP-A- 0 271 929** |
| **EP-A- 0 276 874** | **EP-A- 0 298 883** |
| **DE-A- 2 721 786** | **DE-A- 2 721 787** |

- **THE BRITISH POLYMER JOURNAL, December 1980, pages 132-146; J.-I. JIN et al.: "Thermotropic Liquid Crystalline Polyesters with Rigid or Flexible Spacer Groups"**
- **Derwent Abstract No. 90013023; Database WPIL; & JP-A-01 294 732 (MITSUBISHI KASEI CORP.) 28.11.1989**
- **PATENT ABSTRACTS OF JAPAN, Vol. 12, No. 438 (C-544), 17 November 1988; & JP-A-63 162 722 (MITSUBISHI KASEI CORP) 06.07.1988**

Remarks:

The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 356 226 B1

Printed by Xerox (UK) Business Services
2.16.7 (HRS)/3.6

## Description

This invention relates to a novel aromatic polyester, to a processes for producing it and to a molding, film or fibre comprising it.

The aromatic polyester shows liquid crystallinity (optical anisotropy) at melting so that it has excellent moldability (fluidity), and has a high modulus of elasticity, high strength, high heat resistance and also low water absorption. It has particularly excellent soldering resistance so that it can be utilized as, for example, an electric or electronic material such as a precision component, a connector, an IC socket or an encapsulated material, a molding such as a part for an automobile, a film or a fiber.

When the process of the present invention is employed, the aromatic polyester of the present invention can be prepared in conventional and usual apparatus for preparing polyesters, which leads to an improvement in productivity and also lowers costs.

In recent years, in the fields of moldings of for example, precision instrument parts, electric or electronic parts, automobile parts, or films or fibers, the demand for engineering plastics having excellent, for example, rigidity, heat resistance and chemical resistance has increased. As a polyester satisfying such demands in recent years, a liquid crystal polyester, for example a copolyester showing melt anisotropy, obtained from polyethylene terephthalate and p-acetoxybenzoic acid ("Journal of Polymer Science Polymer Chemistry Edition ", vol.14, p. 2043 (1976) and Japanese Patent Publication No. 18016/1981 ) has attracted attention. This liquid crystalline copolyester obtained from polyethylene terephthalate and p-acetoxybenzoic acid has excellent mechanical properties without the need for blending a reinforcing material. For example, it has been reported that it has a 5-times or greater modulus of elasticity, a 4-times or greater strength and 25-times or greater impact strength than polyethylene terephthalate.

However, the liquid crystalline copolyester does not necessarily have a satisfactory heat resistance, and, particularly, has no soldering resistance, so that it cannot be used for, for example, electronic parts. Thus, it has a disadvantage that its use is considerably limited.

On the other hand, various aromatic polyesters containing the constitutional unit:

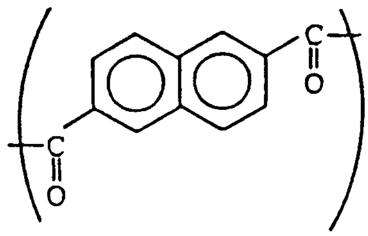

are known, for example those described in British Polymer Journal, 154 (1980); Macromolecules, 16 (7), 1027 (1983); IUPAC Macromol. Symp. 28th, 800 (1982); US-A-4,067,852 and US-A-4,664,972; and JP-A-156313/1987, JP-A-206017/1987, JP-A-39623/1987 and JP-A-48722/1987.

These aromatic polyesters have the disadvantages of lacking soldering resistance, or, in case of having soldering resistance, they sometimes cannot be prepared in the conventional producing apparatus for polyesters (for example, the bulk method of reacting in a vertical type polymerization reactor at 320°C).

For example, according to British Polymer Journal, 154 (1980) and US-A-4,067,852, a polyester comprising

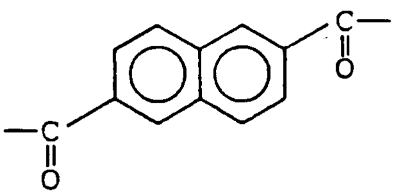 , 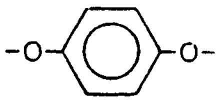 and 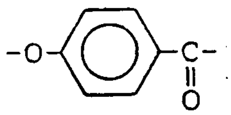

has a high melting point of 330 °C or higher so that it cannot be prepared by the apparatus used for producing a polyester conventionally at 320 °C or lower. For this reason, this polyester is prepared with the use of a solvent or at a temperature of as high as 335 °C. A polyester comprising

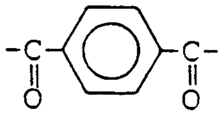 , 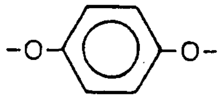 and 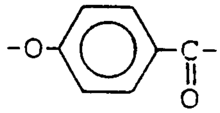

has a higher melting point (500 °C or higher), so that production by the conventional apparatus for producing a polyester is impossible.

Also, according to the description of Macromolecules, 16, 1027 (1983), a polyester comprising

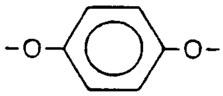 , 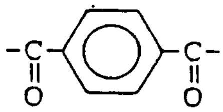 , 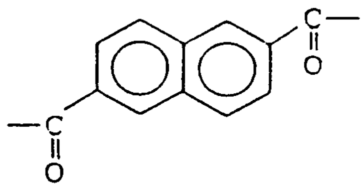 and

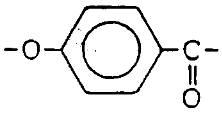

has been described in detail, but the melting point thereof are as high as 320°C or higher in any composition ratio of these four components. Thus, they cannot be prepared in the conventional polymerizing apparatus which has been used at 320°C or lower.

In the above document, the melting point has been lowered by using

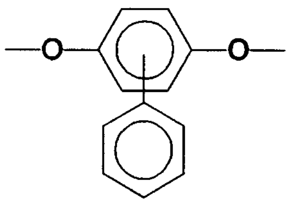

in place of

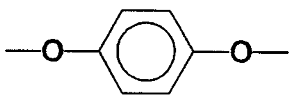

but in this case, while the melting point has remarkably been lowered, the polymer becomes amorphous so that soldering resistance at 260°C is lost.

There are many reports of a polyester comprising

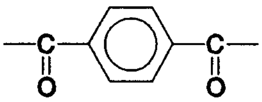 , 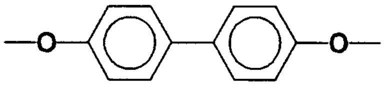 and 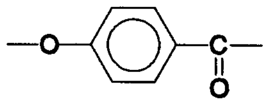 ,

but it is clear that it cannot be prepared in the conventional and usually used polyester-producing apparatus.

EP-A-226839 describes wholly aromatic polyesters which form a liquid-crystalline fiber-forming melt below 330°C and are composed of the following units:

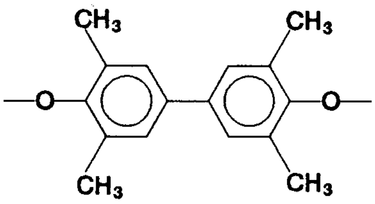 , 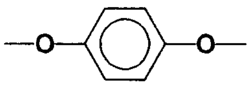 , 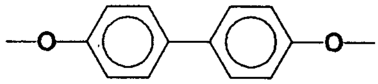 ,

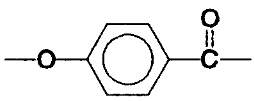 and 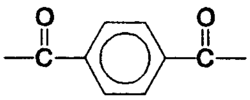 .

The present inventors have sought to provide an aromatic polyester which has a high modulus of elasticity, high strength, low water absorption, excellent heat resistance, particularly soldering resistance ( 240 °C or 260 °C, 10 s or more ) and yet also has excellent fluidity and good moldability, and which is suitable for engineering plastics, and to provide a process for producing it using the conventional and usual polyester-producing apparatus (for example, a vertical type polymerization reactor used in the bulk method at a temperature of 320 °C or less) with good efficiency. As a result they have found an aromatic polyester which satisfies the above requirements.

The present invention provides an aromatic polyester having a melt viscosity of 10 poise (1Pas) or more at 320°C and a shear rate of 100 $s^{-1}$, which polyester consists of:

(a) 2 to 40 mole % of 2,6-naphthalenedicarboxylic acid units of formula (1):

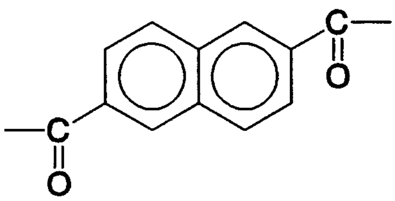 (1)

(b) 2 to 35 mole % of terephthalic acid units of formula (2):

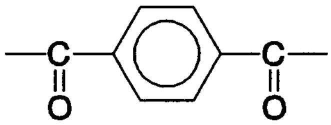

(2)

(c) 3 to 40 mole % of 4,4'-dihydroxydiphenyl units of formula (3):

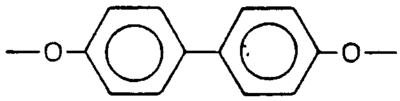

(3)

(d) 2 to 40 mole % of at least on member selected from the aromatic diol units of formulae (4) to (8):

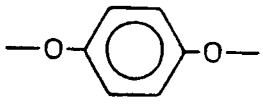

(4)

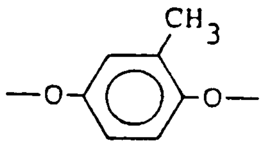

(5)

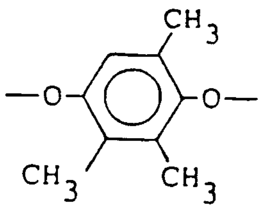

(6)

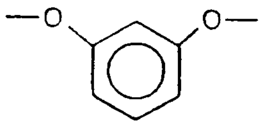

(7)

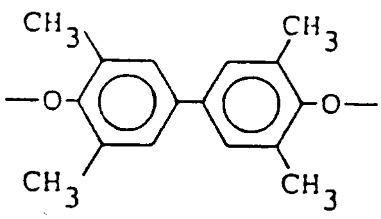

(8)

and

(e) 20 to 80 mole % of p-hydroxybenzoic acid units of formula (9):

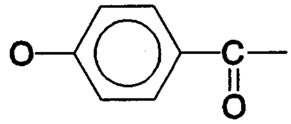

(9)

and (f) less than 3 mole % of other components;
wherein, when the molar numbers of the above units (1), (2), (3), (4), (5), (6), (7), (8) and (9) are represented by [1], [2], [3], [4], [5], [6], [7], [8] and [9], respectively, (hereinafter represented by [A]), each mole % is a value based on [1] + [2] + [3] + [4] + [5] + [6] + [7] + [8] + [9].

Figs. 1, 3 and 4 are IR charts of the polymers respectively obtained in Examples 1, 2 and 3.
Fig. 2, is a Vibron chart of the polymer obtained in Example 1. The curves 1-3 in Fig. 2 depict the dynamic modulus (E'), loss modulus (E") and tan δ defined as E"/E', respectively.

The present invention also provides a process for producing a polyester as defined above, which comprises reacting, in the presence of an acid anhydride:

(g) 2 to 40 mole % of 2,6-naphthalenedicarboxylic acid of formula (10):

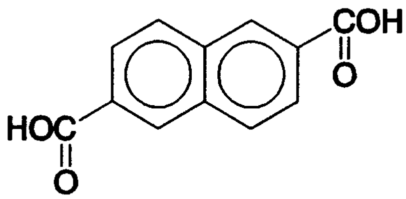

(10)

(h) 2 to 35 mole % of terephthalic acid of formula (11):

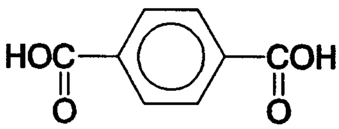

(11)

(i) 3 to 40 mole % of 4,4'-dihydroxydiphenyl of formula (12);

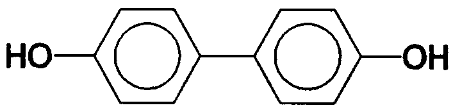

(12)

(j) 2 to 40 mole % of at least one member selected from the aromatic diol compounds of formulae (13) to (17):

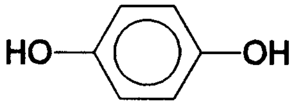

(13)

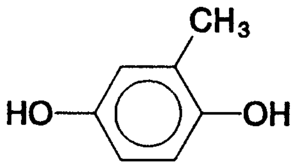

(14)

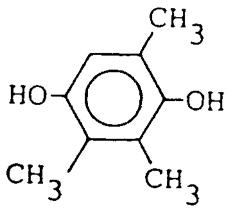

(15)

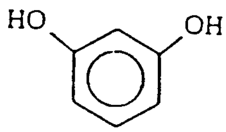

(16)

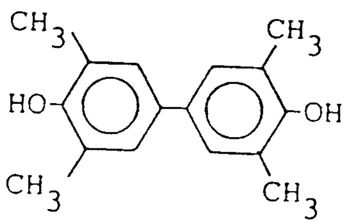

(17)

and

(k) 20 to 80 mole % of p-hydroxybenzoic acid of formula (18):

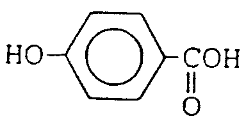

(18)

and (l) less than 3 mol % of other components;
wherein, when molar numbers of the above compounds (10), (11), (12), (13), (14), (15), (16), (17) and (18) are represented by [10], [11], [12], [13], [14], [15], [16], [17] and [18], respectively, each mole % is a value based on [10] + [11] + [12] + [13] + [14] + [15] + [16] + [17] + [18] (hereafter represented by [B]),

and further reacting the components at a temperature of 100 to 400 °C while removing the excess acid anhydrides and acids formed therefrom.

The content of the 2,6-naphthalenedicarboxylic acid units of formula (1) is 2 to 40 mole %, preferably 3 to 35 mole %, more preferably 3 to 30 mole %, particularly preferably 3 to 15 mole % based on [A]. When the 2,6-naphthalenedicarboxylic acid units are present in an amount of 2 to 40 mole %, not only is the liquid crystallinity of the resulting aromatic polyester higher, but also the polyester can be prepared in a conventional polyester-producing apparatus (at 320 °C or less). The conventional polyester-producing apparatus may include, for example, those as described in " Sen-i Binran " (Genryo-hen), p. 808, Fig. 7.11. Also, "can be prepared" means that the polymer maintains fluidity in a polymerization reactor without solidification so that it can be drawn out from the polymerization reactor. Furthermore, due to a high degree of liquid crystallinity, improvements in the modulus of elasticity and moldability can be obtained. If the content of the 2,6-naphthalenedicarboxylic acid unit is less than 2 mole % or exceeds 40 mole %, the produced polymer solidifies during polymerization and becomes hard to draw out from the reactor.

The content of the terephthalic acid units of formula (2) is 2 to 35 mole %, preferably 5 to 30 mole %, more preferably 7 to 25 mole % based on [A]. If component (2) exists in an amount of 40 mole % or less, not only can a much higher degree of liquid crystallinity be obtained, but also the polymer can easily be prepared in a conventional polyester-producing apparatus (at 320 °C or less). Here, "can be prepared in a conventional apparatus" has the same meaning as above. If it exceeds 40 mole %, the produced polymer solidifies during polymerization and becomes hard to draw out from the reactor.

The relative proportion of (2) and (1) ([2]/[1]) is preferably 0 ≤ [2]/[1] ≤ 10, and 0.3 ≤ [2]/[1] ≤ 7 is particularly preferred. From a standpoint of obtaining a higher modulus of elasticity, it is preferred that [2] is about the same as [1] or larger than [1]. If [2]/[1] exceeds 10, the flow initiating temperature becomes high and it becomes difficult to draw out the polymer from the reaction, so that it is not preferred.

The content of 4,4′-dihydroxydiphenyl units of formula (3) is 3 to 40 mole %, preferably 4 to 30 mole %, more preferably 5 to 25 mole % and particularly preferably 10 to 25 mole % based on [A]. When it is 3 to 40 mole %, the units not only provide a higher degree of liquid crystallinity but also make it easier to prepare the aromatic polyester in a conventional polyester-producing apparatus (at 320 °C or less). If it is less than 3 mole % or exceeds 40 mole %, the produced polymer solidifies during polymerization and becomes hard to draw out from the reactor.

The total content of the aromatic diol units of formulae (4) to (8) is 2 to 40 mole %, preferably 2 to 30 mole % based on [A]. When the content is 2 to 40 mole %, the units not only provide a higher degree of liquid crystallinity but also make it easier to prepare the aromatic polyester in a conventional polyester-producing apparatus (at 320 °C or less). If it is less than 2 mole % or exceeds 40 mole %, the produced polymer solidifies during polymerization and becomes hard to draw out from the reactor.

Among these aromatic diol units, particularly when the hydroquinone unit of formula (4) and/or the methylhydroquinone unit of formula (5) are present, the content of the hydroquinone units and/or methylhydroquinone units is preferably 3 to 25 mole %, more preferably 3 to 15 mole % based on [A].

The relative proportion of the units of formula (4) and/or formula (5) and the units of formula (3) (([4] + [5])/[3]) is preferably in the range of 0.1 to 10, particularly 0.3 to 5.

When the trimethylhydroquinone units of formula (6) and/or the resorcin units of formula (7) is/are present, the content of the trimethylhydroquinone units and/or resorcin units is preferably 2 to 25 mole %, more preferably 2 to 15 mole %, particularly preferably 2 to 10 mole % based on [A].

The relative proportion of the units of formula (6) and/or formula (7) and the units of formula (3) (([6] + [7])/[3]) is preferably in the range of 0.05 to 5, particularly 0.1 to 2.

When the tetramethylbiphenol unit of formula (8) is present, its content is preferably 2 to 20 mole %, particularly preferably 2 to 10 mole %.

The relative proportion of the units of formula (8) and the units of formula (3) ([8]/[3]) is preferably in the range of 0.05 to 5, particularly 0.1 to 2.

Of the above aromatic diol units of formulae (4) to (8), units of formula (4) and/or formula (5) are particularly preferred, and the next preferred are units of formula (8).

It is preferred to set the contents of the units of formulae (1) to (8) so as to satisfy the relation 0.8 ≤ ([1] + [2])/([3] + [4] + [5] + [6] + [7] + [8]) ≤ 1.2. Outside this range the degree of polymerization becomes insufficient. More preferably, 0.9 ≤ ([1] +[2])/ ([3] + [4] + [5] + [6] + [7] + [8]) ≤ 1.1, and particularly preferably 0.95 ≤ ([1] + [2])/([3] + [4] + [5] + [6] + [7] + [8]) ≤ 1.05.

The content of the p-hydroxybenzoic acid units of formula (9) is 20 to 80 mole %, preferably 25 to 75 mole %, more preferably 30 to 70 mole %, particularly preferably 40 to 70 mole % based on [A].

When the content is 20 to 80 mole %, the units not only provide a higher degree of liquid crystallinity but also make it easier to prepare the aromatic polyester in a conventional polyester-producing apparatus (at 320 °C or less). If it is less than 20 mole % or exceeds 80 mole %, the produced polymer solidifies during polymerization and becomes hard to draw out from the reaction tank.

It is preferred that 0.1 ≤ ([1] + [2])/[9] ≤ 9, more preferably 0.2 ≤ ([1]+ [2])/[9] < 4, particularly preferably 1 ≤ ([1] + [2])/[9] ≤ 4.

If the relative proportion of ([1] + [2])/[9) is less than 0.1 or exceeds 9, the flow initiating temperature becomes high and it becomes difficult to draw out the polymer from a reactor, so that it is not preferred.

In the present invention, components other than the above may be added in a small content (about 3 mole % or less based on [A]).

The aromatic polyester of the present invention shows optical anisotropy (liquid crystallinity) in a melting state whereby it has excellent moldability, a high modulus of elasticity, high strength and good heat resistance. This is because it contains the above units in specified proportions. Also, there is a great merit that even when a conventional polyester-producing apparatus (for example, a vertical type polyethylene terephthalate producing apparatus) is used, the polymer can be drawn from the bottom of the reactor (hereinafter referred to drawn property). The flow initiating temperature is low due to the combination of the above units in specific proportions.

By using the components of formulae (1), (3), at least one of (4) to (8) and (9), it could not have been expected in advance that the heat resistance would be improved, thus providing soldering resistance, the effect of not increasing the flow initiating temperature so high and making a flowable state generally at a temperature of 320 °C or lower and the effect of rather lowering the melt viscosity thus improving moldability (fluidity).

It is clear from the facts shown below that the aromatic polyester of the present invention has excellent heat resistance. For example, when the absolute values of complex elastic moduli (E*) measured by a Vibron (110 Hz) at 40 °C and 150 °C are defined as $|E^*|_{40}$ and $|E^*|_{150}$, respectively, these values are as follows.

$$|E^*|_{150}/|E^*|_{40} \geqq 1/3$$

$$|E^*|_{150} \geqq 4.0 \times 10^{10}\ \text{dyne/cm}^2\ (4.0\ \text{GPa})$$

$$|E^*|_{40} \geqq 8.0 \times 10^{10}\ \text{dyne/cm}^2\ (8.0\ \text{GPa})$$

In the above, the complex elastic modulus (E*) is represented by the following expression:

$$E^* = E' + iE''$$

wherein E' is the dynamic modulus and E'' is the loss modulus, and the absolute value of complex elastic modulus is represented by the following expression:

$$|E^*| = \sqrt{E'^2 + E''^2}$$

When the composition ratio of the polymer is suitably selected it is possible to obtain an aromatic polyester having the following values.

$$|E^*|_{150}/|E^*|_{40} \geqq 1/2$$

$$|E^*|_{150} \geqq 6.0 \times 10^{10}\ \text{dyne/cm}^2\ (6.0\ \text{GPa})$$

$$|E^*|_{40} \geqq 12.0 \times 10^{10}\ \text{dyne/cm}^2\ (12.0\ \text{Gpa})$$

The absolute value of the complex elastic modulus measured at 240°C is

$$|E^*|_{240} \geqq 2.0 \times 10^{10}\ \text{dyne/cm}^2\ (2.0\ \text{GPa})$$

and this shows the extremely high heat resistance of the polymers of the present invention. Thus, the aromatic polyester has soldering resistance at a temperature of as high as 240°C.

If the composition ratio of the polymer is suitably selected it is possible to obtain a polymer having an extremely high heat resistance in which the absolute value of the complex elastic modulus measured at 260°C is

$$|E^*|_{260} \geqq 2.0 \times 10^{10}\ \text{dyne/cm}^2\ (2.0\ \text{GPa})$$

Thus, the aromatic polyester has soldering resistance even at a temperature of as high as 260°C.

The aromatic polyester of the present invention has a high modulus of elasticity, as mentioned above, at 240 °C, and further at 260 °C when the composition unit proportions of the polymer are suitably selected, and has a great

advantage that it can be prepared by the melt polymerization method at 320°C with the conventional polyester-producing apparatus.

Also, it has a low melt viscosity as a rheological characteristic and thus has good moldability.

The aromatic polyester of the present invention is required to have a melt viscosity of 10 poise (1 Pas) or more measured at 320 °C and a shear rate of 100 $s^{-1}$. If it is less than 10 poise (1 Pas), sufficient strength cannot be obtained. A preferred melt viscosity under the above measurement conditions is 100 poise (10 Pas) or more, particularly preferred is 100 (10 Pas) to 10,000 poise (1,000 Pas) in the point of moldability.

The aromatic polyester of the present invention can be prepared by using starting materials corresponding to the above constitutional units in a predetermined ratio and effecting condensation polymerization with a well known polymerization method such as a melt polymerization method, solution polymerization method or interfacial polymerization method. Particularly, the melt polymerization method is advantageous for industrial production since no post-treatment is necessary after the polymerization reaction, while the solution polymerization and the interfacial polymerization methods have the advantage that the polymerization reaction can be carried out at a relatively low temperature.

In the case of the melt polymerization method, there can be usually employed a method in which a part of the above starting materials is used in the form of an acylated compound or an ester, and polymerization is carried out at a temperature of 200 to 400 °C, or a method in which an acylation agent is added to the above starting materials and polymerization is effected. Also, in the solution polymerization method or the interfacial polymerization method, the carboxyl group of the starting monomer is generally used in the form of an acid halide, particularly an acid chloride, and in the interfacial polymerization method, the hydroxyl group of the starting material is used in the form of a salt.

Particularly, according to the process of the present invention, the aromatic polyester can be produced extremely advantageously and effectively from the viewpoints of, for example, production costs and workability.

The composition of the produced aromatic polyester of the present invention is the same as that of the charged starting materials. Therefore, the composition of the starting materials is selected according to the desired composition of the aromatic polyester.

As the catalyst, there may be used, for example, BuSnOOH, $Bu_2SnO$, $Ti(Oi\text{-}Pr)_4$, $Zn(OAc)_2$, $Sn(OAc)_2$, $Sb_2O_3$, $Co(OAc)_2$ or KOAc. A catalyst need not be used.

As the acylation agent, there may be mentioned, for example, acid anhydrides such as acetic anhydride, propionic anhydride or benzoic anhydride. Among these, acetic anhydride is particularly preferred. These acid anhydrides may be used singly or in combination of two or more. It is preferred to use the acid anhydrides in such an amount that the molar proportion of the acid anhydride and the total hydroxyl groups in the starting materials is 0.8 to 2.0, preferably 1.0 to 1.5. That is, when the mole number of the acid anhydride is represented by [Anh], and mole numbers of the starting materials represented by formulae (12) to (18) are represented by [12] to [18], respectively, it is preferred for the aromatic polyester to satisfy the relation

$$0.8 \leq \frac{[Anh]}{2 \times \{[12]+[13]+[14]+[15]+[16]+[17]\}+[18]} \leq 2.0$$

preferably

$$1.0 \leq \frac{[Anh]}{2 \times \{[12]+[13]+[14]+[15]+[16]+[17]\}+[18]} \leq 1.5.$$

The reaction temperature is not particularly limited so long as it is in the range of 100 to 400 °C, but when acylation is first mainly carried out by adding an acid anhydride and then condensation is mainly carried out thereafter, a temperature of 100 to 200 °C is preferred for acylation, and it is advantageous to carry out the condensation at an elevated temperature of 250 to 400 °C.

In the present invention, the reaction is carried out while removing the acid anhydride and acids formed therefrom out of the system. In order to carry out the removal with good efficiency, an inert gas such as nitrogen or argon may be passed through the system or the pressure may be reduced. Also, if the degree of polymerization is to be further increased, it is possible to use the solid state polymerization method.

The aromatic polyester of the present invention thus obtained has optical anisotropy (liquid crystallinity) in a melting state, and thus has excellent fluidity and therefore good moldability. Accordingly, it is possible to effect the usual melt molding such as extrusion molding, injection molding or compression molding, whereby a molded article, film or fiber, for example, can easily be produced. Particularly, it is suitable for a precision molded article since it has high fluidity.

At the molding step, to the aromatic polyester of the present invention, there may be added, for example, fibers such as glass fibers or carbon fibers, fillers such as talc, mica or calcium carbonate, nuclear agents, pigments, antioxidants, lubricants, stabilizers, flame retardants, other various additives, and other thermoplastic resins, to provide desired characteristics to the resulting molded article.

Also, by blending with other polymer or alloying, it is possible to make a composition having both the merits

of the other polymer and those of the aromatic polyester of the present invention.

The present invention will now be explained in more detail in the following Examples.

For measuring the melt viscosity in the Examples, a flow tester (produced by Shimazu Seisakusho K.K.) was used under the conditions of a temperature of 320 °C, a shear rate ($\dot{\gamma}$) of 100 $s^{-1}$ and a length/diameter of a cylinder nozzle = 10.

As an infrared spectrophotometer, 20DXBFT-IR produced by Nicolet Co. was used, and the IR spectrum was measured with a solution in hexafluoroisopropanol or with a KBr disc.

Molding was carried out by using a 0.1 oz (2.8 g) injection molding machine produced by Nippon Seiko K.K. to prepare a molded piece.

As the Vibron, a Rheovibron produced by Toyo Boldwin Co. was used and the above molded piece was measured under 110 Hz.

Optical anisotropy (liquid crystallinity) was observed by using a polarized optical microscope attached with a hot stage.

The flow initiating temperature was judged from the data of the Vibron.

Water absorption was measured according to ASTM-D-570.

Evaluation of soldering resistance was carried out by dipping a sample in a soldering bath at a temperature of 240 °C or 260 °C for 10 seconds in accordance with condition B in Table 1 of JIS C5034.

Example 1

In a reaction vessel equipped with a stirrer, an outlet for evacuation and a $N_2$ inlet, were charged the following starting materials.

| | |
|---|---|
| (1) 4,4′-dihydroxydiphenyl | 16.89 g (0.091 mole) |
| (2) hydroquinone | 9.99 g (0.091 mole) |
| (3) terephthalic acid | 15.07 g (0.091 mole) |
| (4) 2,6-naphthalenedicarboxylic acid | 19.61 g (0.091 mole) |
| (5) p-hydroxybenzoic acid | 58.45 g (0.423 mole) |

After replacing the atmosphere nitrogen under reduced pressure, an $N_2$ seal was made, and then 88.26 g (0.86 mole) of acetic anhydride was added. Under stirring, the reaction vessel was dipped in an oil bath at a temperature of 145 °C to conduct the reaction for one hour, and then the temperature was raised to 320 °C over 1.5 hours.

Then, the pressure was reduced from normal pressure to 10 mmHg (1.3 kPa) over 45 minutes, and further reduced to 0.3 mmHg (40 Pa) over 15 minutes. Thereafter, the reaction was continued for one hour to complete the polymerization reaction.

This polymer flowed under gravity and was able to be drawn out from the bottom of the reaction vessel. The melt viscosity (320 °C, 100 $s^{-1}$) of the polymer thus obtained was 320 poise (32 Pas)

This polymer was molded with a 0.1 oz (2.8 g) injection molding machine at 320 °C and the molded pieces were measured by the Vibron. The following results were obtained.

$$|E^*|_{40} = 10.5 \times 10^{10} \text{ dyne/cm}^2 \text{ (10.5 GPa)}$$

$$|E^*|_{150} = 4.6 \times 10^{10} \text{ dyne/cm}^2 \text{ ( 4.6 GPa)}$$

$$|E^*|_{260} = 3.9 \times 10^{10} \text{ dyne/cm}^2 \text{ ( 3.9 Gpa)}$$

Tensile tests were carried out to obtain the following results.

| | |
|---|---|
| Tensile modulus | 61,700 kg/cm$^2$ |
| Tensile strength | 1,270 kg/cm$^2$ |

(continued)

| | |
|---|---|
| Elongation at break | 3.1 % |

Also, by using the same molded pieces, the soldering resistance (260 °C, 10 seconds) was measured but no change in appearance was observed.

The IR spectrum chart of the polymer is shown in Fig. 1 and the vibron chart thereof in Fig. 2. The compositional ratio of this polymer was (1)/(2)/(3)/(4)/(5) = 11.5/11.5/11.5/11.5/54.

Example 2

In a reactor equipped with a stirrer, an outlet for evacuation and a $N_2$ inlet, were charged the following starting materials.

| | |
|---|---|
| (1) 4,4′-dihydroxydiphenyl | 22.32 g (0.12 mole) |
| (2) methylhydroquinone | 7.44 g (0.06 mole) |
| (3) terephthalic acid | 19.92 g (0.12 mole) |
| (4) 2,6-naphthalenedicarboxylic acid | 12.96 g (0.06 mole) |
| (5) p-hydroxybenzoic acid | 57.96 g (0.42 mole) |

After replacing the atmosphere with nitrogen under reduced pressure, an $N_2$ seal was made, and then 87.52 g (0.86 mole) of acetic anhydride was added. Under stirring, the reaction vessel was dipped in an oil bath at a temperature of 145 °C to conduct the reaction for one hour, and then the temperature was raised to 320 °C over 1.5 hours.

Then, the pressure was reduced from normal pressure to 10 mmHg (1.3 kPa) over 45 minutes, and further reduced to 0.3 mmHg (40 Pa) over 15 minutes. Thereafter, the reaction was continued for 2 hours to complete the polymerization reaction.

This polymer flowed under gravity and was able to be drawn out from the bottom of the reaction vessel. This polymer was molded with a 0.1 oz (2.8 g) injection molding machine at 320 °C and the molded pieces were measured by the Vibron to obtain the following results.

$$|E^*|_{40} = 15.0 \times 10^{10} \text{ dyne/cm}^2 \text{ (15.0 GPa)}$$

$$|E^*|_{150} = 8.3 \times 10^{10} \text{ dyne/cm}^2 \text{ (8.3 GPa)}$$

$$|E^*|_{260} = 6.8 \times 10^{10} \text{ dyne/cm}^2 \text{ (6.8 GPa)}$$

Tensile tests were carried out to obtain the following results:

| | |
|---|---|
| Tensile modulus | 81,200 kg/cm$^2$ |
| Tensile strength | 1,670 kg/cm$^2$ |
| Elongation at break | 2.9 % |

The water absorption of the polymer was measured to obtain the extremely low result of 0.02 %.

Also, by using the same molded pieces, the soldering resistance (260 °C, 10 seconds) was measured but no change in appearance was observed.

The IR spectrum chart of the polymer is shown in Fig.3. The compositional ratio of this polymer was (1)/(2)/(3)/(4)/(5) = 15.3/7.7/15.3/7.7/54.

Example 3

In a 20ℓ vertical reactor equipped with a stirrer, an outlet for evacuation and a $N_2$ inlet, were charged the following starting materials.

| | |
|---|---|
| (1) 4,4′-dihydroxydiphenyl | 819 g (4.5 mole) |
| (2) trimethylhydroquinone | 669 g (4.5 mole) |
| (3) terephthalic acid | 730 g (4.5 mole) |
| (4) 2,6-naphthalenedicarboxylic acid | 950 g (4.5 mole) |
| (5) p-hydroxybenzoic acid | 2,833 g (21 mole) |

After replacing the atmosphere with nitrogen under reduced pressure, an $N_2$ seal was made, and then 4,277 g (42 mole) of acetic anhydride was added. Under stirring, the mixture was reacted at 145 °C for one hour, and then the temperature was raised to 320 °C and polymerization was carried out for 3 hours.
The final pressure was 0.5 mmHg (67 Pa).
This polymer flowed under gravity and was able to be drawn out from the bottom of the reactor. The melt viscosity (320 °C, 100 $s^{-1}$) of the polymer thus obtained was 210 poise (21 Pas)
This polymer was molded with a 0.1 oz (2.8 g) injection molding machine at 320 °C and the molded pieces were measured by the Vibron to obtain the following results.

$$|E^*|_{40} = 17.9 \times 10^{10}\ \text{dyne/cm}^2\ (17.9\ \text{GPa})$$

$$|E^*|_{150} = 7.9 \times 10^{10}\ \text{dyne/cm}^2\ (7.9\ \text{GPa})$$

$$|E^*|_{260} = 1.0 \times 10^{10}\ \text{dyne/cm}^2\ (1.0\ \text{GPa})$$

| | |
|---|---|
| Tensile modulus | 97,600 kg/cm$^2$ |
| Tensile strength | 1,490 kg/cm$^2$ |
| Elongation at break | 1.9 % |

Also, by using the same molded pieces, the soldering resistance (240 °C, 10 seconds) was measured but no change in appearance was observed.
The IR spectrum chart of the polymer is shown in Fig.4. The compositional ratio of this polymer was (1)/(2)/(3)/(4)/(5) = 11.5/11.5/11.5/11.5/54.
The polymer was added with 30 weight % of glass fibers, and after mixing and kneading with a twin-screw extruder, it was molded using a 0.1 oz. (2.8 g) injection molding machine to prepare a dumbbell specimen.
The soldering resistance (260 °C, 10 seconds) of the specimen was measured but no change in appearance was observed.

Examples 4-25

In the same manner as in Example 1 except for replacing the monomers, compositional ratio and polymerization temperature as shown in Table 1, polymerization was effected. The results of measurements of physical properties are shown in Table 1.

Table 1

| Ex. No. | Composition (mol %) | | | | |
|---|---|---|---|---|---|
| | 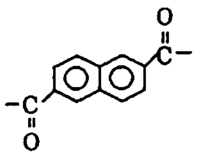 | 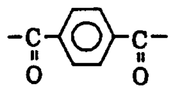 | 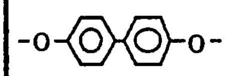 | –O–R–O– | 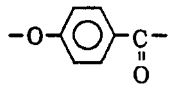 |
| 4 | 11.5 | 11.5 | 17.2 | 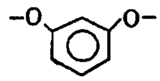 5.8 | 54 |
| 5 | 11.5 | 11.5 | 7.7 | 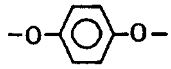 15.3 | 54 |
| 6 | 11.5 | 11.5 | 15.3 | 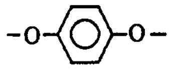 7.7 | 54 |
| 7 | 7.7 | 15.3 | 15.3 | 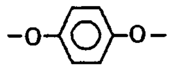 7.7 | 54 |
| 8 | 12.5 | 4.2 | 12.5 | 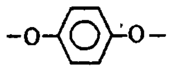 4.2 | 66.7 |
| 9 | 22.2 | 11.1 | 22.2 | 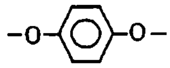 11.1 | 33.3 |
| 10 | 7.1 | 21.4 | 7.1 | 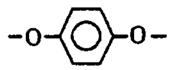 21.4 | 42.9 |
| 11 | 7.7 | 15.4 | 18.5 | 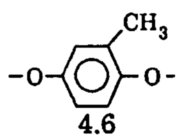 4.6 | 53.8 |

Table 1 (Ccnt'd)

| Ex. No. | Polymerization | | Melt Viscosity (poise) (Pas) | Complex Elastic Modulus | | | Soldering Resistance | | Tensile Strength (kg/cm²) | Flow Initiating Temp. (°C) | Liquid Crystallinity |
|---|---|---|---|---|---|---|---|---|---|---|---|
| | Temp. (°C) | Drawing Out | | $\|E^*\|_{40}$ (GPa) | $\|E^*\|_{150}$ (GPa) | $\|E^*\|_{260}$ (GPa) | Temp. (°C) | Resistance | | | |
| 4 | 320 | good | – | – | – | – | 240 | good | – | – | good |
| 5 | 320 | good | 630 (63) | 9.1 | 4.3 | 3.8 | 260 | good | 1320 | 317 | good |
| 6 | 320 | good | 570 (57) | 10.7 | 5.4 | 4.6 | 260 | good | – | 303 | good |
| 7 | 320 | good | 480 (48) | 11.3 | 5.8 | 4.8 | 260 | good | 1630 | 286 | good |
| 8 | 320 | good | 1320 (132) | 8.3 | 4.1 | 3.7 | 260 | good | 1190 | 315 | good |
| 9 | 320 | good | 940 (94) | 10.4 | 5.6 | 4.6 | 260 | good | 1560 | 310 | good |
| 10 | 320 | good | 1430 (143) | – | – | – | 260 | good | – | – | good |
| 11 | 320 | good | 410 (41) | 13.6 | 7.1 | 5.0 | 260 | good | 1490 | 316 | good |

Table 1 (Cont'd)

| Ex. No. | Composition (mol %) | | | | |
|---|---|---|---|---|---|
| | 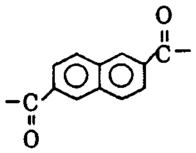 | 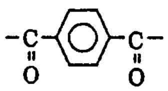 | 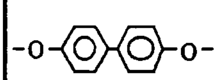 | -O-R-O- | 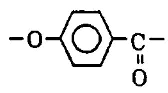 |
| 12 | 8.3 | 8.3 | 8.3 | 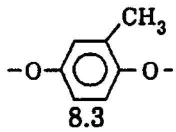 8.3 | 66.7 |
| 13 | 7.7 | 15.3 | 15.3 | 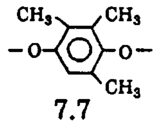 7.7 | 54 |
| 14 | 8.3 | 8.3 | 8.3 | 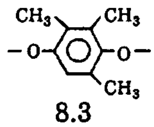 8.3 | 66.7 |
| 15 | 11.1 | 22.2 | 26.7 | 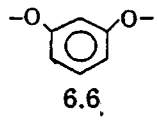 6.6 | 33.3 |
| 16 | 8.3 | 8.3 | 11.7 | 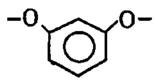 5.8 | 66.7 |
| 17 | 15.4 | 7.7 | 11.5 | 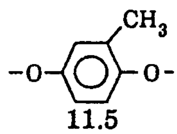 11.5 | 54 |
| 18 | 17.2 | 5.8 | 15.3 | 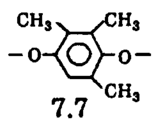 7.7 | 54 |
| 19 | 15.4 | 7.7 | 7.7 | 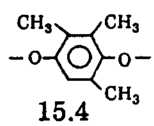 15.4 | 54 |

Table 1 (Cont'd)

| Ex. No. | Polymerization | | Melt Viscosity (poise) (Pa s) | Complex Elastic Modulus | | | Soldering Resistance | | Tensile Strength ($kg/cm^2$) | Flow Initiating Temp. (°C) | Liquid Crystallinity |
|---|---|---|---|---|---|---|---|---|---|---|---|
| | Temp. (°C) | Drawing Out | | $\|E^*\|_{40}$ (GPa) | $\|E^*\|_{150}$ (GPa) | $\|E^*\|_{260}$ (GPa) | Temp. (°C) | Resistance | | | |
| 12 | 320 | good | 520 (52) | 17.2 | 8.4 | 6.3 | 260 | good | — | 312 | good |
| 13 | 320 | good | 570 (57) | 14.2 | 7.6 | 4.8 | 260 | good | — | 303 | good |
| 14 | 320 | good | 480 (48) | 13.3 | 6.1 | 4.8 | 260 | good | 1590 | 298 | good |
| 15 | 320 | good | 880 (88) | 10.1 | 6.2 | 4.3 | 260 | good | — | 279 | good |
| 16 | 320 | good | 630 (63) | 9.1 | 4.2 | 3.8 | 240 | good | 1320 | 317 | good |
| 17 | 320 | good | 570 (57) | 10.7 | 5.4 | 2.1 | 240 | good | — | 282 | good |
| 18 | 300 | good | 480 (48) | 11.3 | 5.8 | 2.2 | 240 | good | 1630 | 278 | good |
| 19 | 300 | good | 420 (42) | 12.2 | 6.4 | 3.1 | 240 | good | — | 286 | good |

Table 1 (Cont'd)

| Ex. No. | Polymerization Temp. (°C) | Polymerization Drawing Out | Melt Viscosity (poise) (Pas) | Complex Elastic Modulus $\|E^*\|_{40}$ (GPa) | Complex Elastic Modulus $\|E^*\|_{150}$ (GPa) | Complex Elastic Modulus $\|E^*\|_{260}$ (GPa) | Soldering Resistance Temp. (°C) | Soldering Resistance Resistance | Tensile Strength (kg/cm²) | Flow Initiating Temp. (°C) | Liquid Crystallinity |
|---|---|---|---|---|---|---|---|---|---|---|---|
| 20 | 320 | good | 320 (32) | 11.3 | 4.8 | 4.0 | 260 | good | 1300 | 300 | good |
| 21 | 320 | good | 180 (18) | 14.3 | 5.5 | 3.8 | 260 | good | 1350 | 306 | good |
| 22 | 320 | good | 270 (27) | 9.8 | 4.4 | 3.7 | 260 | good | 1190 | 316 | good |
| 23 | 320 | good | 165 (16.5) | 13.4 | 5.3 | 3.0 | 260 | good | 1340 | 285 | good |
| 24 | 320 | good | 100 (10) | 11.9 | 5.0 | 2.8 | 260 | good | 1360 | 281 | good |

Table 7 (Cont'd)

| Ex. No. | Composition (mol %) | | | | | |
|---|---|---|---|---|---|---|
| | 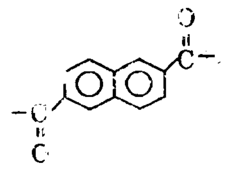 | 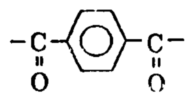 | 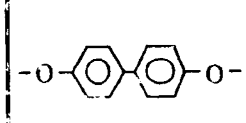 | -O-R-O- | 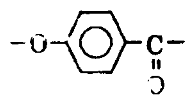 | Others |
| 25 | 7.7 | 15.4 | 15.8 | 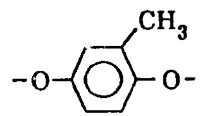 4.6 | 53.8 | 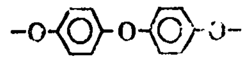 2.7 |

| Ex. No. | Polymerization | | Melt Viscosity (poise) (Pas) | Complex Elastic Modulus | | | Soldering Resistance | | Tensile Strength (kg/cm²) | Flow Initiating Temp. (°C) | Liquid Crystallinity |
|---|---|---|---|---|---|---|---|---|---|---|---|
| | Temp. (°C) | Drawing Out | | $\lvert E^*\rvert_{40}$ (GPa) | $\lvert E^*\rvert_{150}$ (GPa) | $\lvert E^*\rvert_{260}$ (GPa) | Temp. (°C) | Resistance | | | |
| 25 | 320 | good | 2150 (215) | 9.3 | 3.5 | 3.1 | 260 | good | 1200 | 308 | good |

Comparative Examples 1 to 5

In the same manner as in Example 1 except for changing the composition of each constitutional unit as shown in Table 4, polymers were obtained. The results of measurements of physical properties are shown in Table 4.

**Claims**

Table 4

| Comp. Ex. No. | Composition (mol %) | | | | |
|---|---|---|---|---|---|
| | 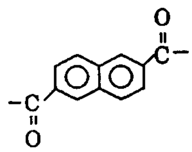 | 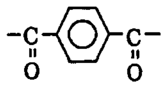 | 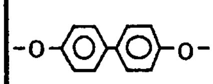 | -O-R-O- | 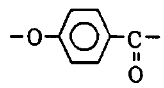 |
| 1 | 23.0 | 0 | 11.5 | 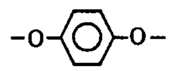 11.5 | 54 |
| 2 | 16.7 | 0 | 16.7 | 0 | 66.6 |
| 3 | 23.0 | 0 | 0 | 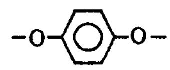 23.0 | 54 |
| 4 | 11.5 | 11.5 | 0 | 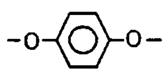 23.0 | 54 |
| 5 | 33.0 | 0 | 17 | 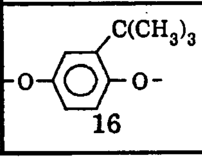 16 | 33 |

Table 4 (Cont'd)

| Comp. Ex. No. | Polymerization | | Melt Viscosity (poise) | Complex Elastic Modulus | | | Soldering Resistance | | Tensile Strength ($kg/cm^2$) | Flow Initiating Temp. (°C) | Liquid Crystallinity |
|---|---|---|---|---|---|---|---|---|---|---|---|
| | Temp. (°C) | Drawing Out | | $\|E^*\|_{40}$ (GPa) | $\|E^*\|_{150}$ (GPa) | $\|E^*\|_{260}$ (GPa) | Temp. (°C) | Resistance | | | |
| 1 | 320 | bad | impossible | – | – | – | – | – | – | – | – |
| 2 | 320 | bad | impossible | – | – | – | – | – | – | – | – |
| 3 | 320 | bad | impossible | – | – | – | – | – | – | – | – |
| 4 | 320 | bad | impossible | – | – | – | – | – | – | – | – |
| 5 | 320 | good | – | 13.0 | 7.4 | <2.0 | 240 | bad | – | – | – |

**1.** An aromatic polyester having a melt viscosity of 10 poise (1 Pas) or more at 320°C and a shear rate of $100s^{-1}$, which polyester consists of:

(a) 2 to 40 mole % of 2,6-naphthalenedicarboxylic acid units of formula (1):

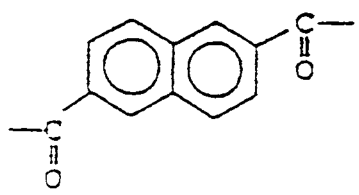

(1)

(b) 2 to 35 mole % of terephthalic acid units of formula (2):

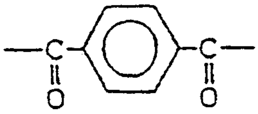

(2)

(c) 3 to 40 mole % of 4,4'-dihydroxydiphenyl units of formula (3):

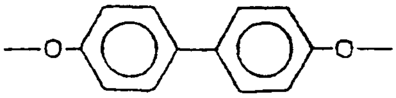

(3)

(d) 2 to 40 mole % of at least one member selected from the aromatic diol units of formulae (4) to (8):

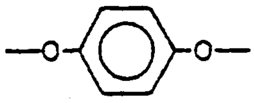

(4)

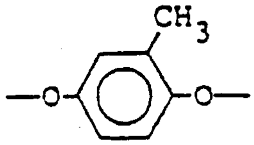

(5)

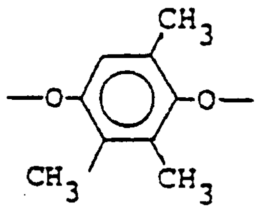

(6)

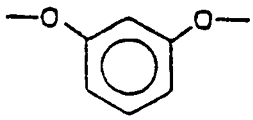

(7)

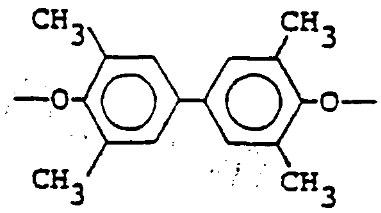

(8)

(e) 20 to 80 mole % of p-hydroxybenzoic acid units of formula (9):

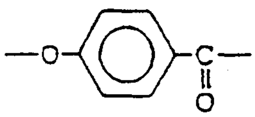

(9);

and

(f) less than 3 mol % of other components;
wherein, when the molar numbers of the above units (1), (2), (3), (4), (5), (6), (7), (8) and (9) are represented by [1], [2], [3], [4], [5], [6], [7], [8] and [9], respectively, each mole % is a value based on [1] + [2] + [3] + [4] + [5] + [6] + [7] + [8] + [9].

**2.** A polyester according to claim 1, which contains, as the aromatic diol unit (d), 3 to 25 mol % of at least one of units (4) and (5).

**3.** A polyester according to claim 1, which contains, as the aromatic diol unit (d), 2 to 20 mol % of unit (8).

**4.** A polyester according to claim 1, which contains, as the aromatic diol unit (d), 2 to 15 mol % of at least one of units (6) and (7).

**5.** A polyester according to any one of the preceding claims, wherein the melt viscosity at 320°C and a shear rate of $100s^{-1}$ is 100 poise (10 Pas) or more.

**6.** A polyester according to any one of the preceding claims, wherein the absolute values of the complex elastic modulus thereof, when measured with a vibron at 110 Hz, satisfy the following relations:

$$|E^*|_{150}/|E^*|_{40} \geq 1/3$$

$$|E^*|_{150} \geq 4.0 \times 10^{10} \text{ dyne/cm}^2 \text{ (4.0 GPa)}$$

$$|E^*|_{40} \geq 8.0 \times 10^{10} \text{ dyne/cm}^2 \text{ (8.0 GPa)}$$

wherein $|E^*|_{40}$ and $|E^*|_{150}$ are the absolute values of the complex elastic modulus measured at 40°C and 150°C, respectively.

**7.** A process for producing a polyester as defined in any one of the preceding claims, which comprises reacting, in the presence of an acid anhydride:

(g) 2 to 40 mole % of 2,6-naphthalenedicarboxylic acid of formula (10):

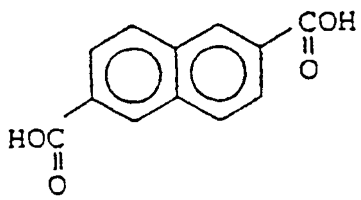

(10)

(h) 2 to 35 mole % of terephthalic acid of formula (11):

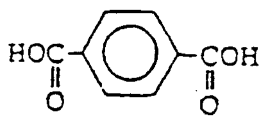

(11)

(i) 3 to 40 mole % of 4,4-dihydroxydiphenyl of formula (12):

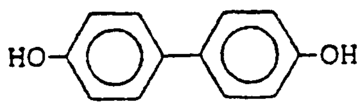

(12)

(j) 2 to 40 mole % of at least one member selected from the aromatic diol compounds of formulae (13) to (17):

(13)

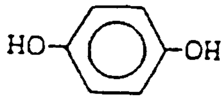

(14)

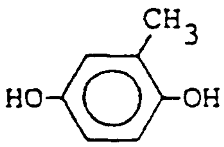

(14)

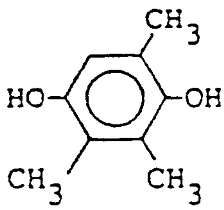

(15)

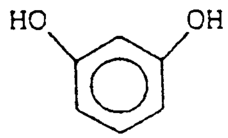

(16)

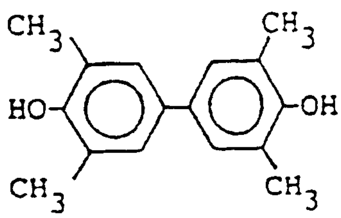

(17)

and

(k) 20 to 80 mole % of p-hydroxybenzoic acid of formula (18):

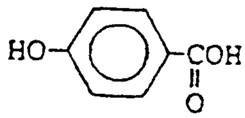

(18)

and (l) less than 3 mol % of other components; wherein, when the molar numbers of the above compounds (10),

(11), (12), (13), (14), (15), (16), (17) and (18) are represented by [10], [11], [12], (13], [14], [15], [16], [17] and [18], respectively, each mole % is a value based on [10] + [11] + [12] + [13] + [14] + [15] + [16] + [17] + [18], and further reacting the components at a temperature of 100 to 400°C while removing the acid anhydride and the acids formed therefrom.

**8.** A molding, film or fibre comprising a polyester as defined in any one of claims 1 to 6.

**Patentansprüche**

**1.** Aromatischer Polyester, der bei 320 °C und einer Scherrate von 100 $s^{-1}$ eine Schmelzviskosität von 10 Poise (1 Pa • s) oder mehr besitzt, bestehend aus:

(a) 2 bis 40 Mol% 2,6-Naphthalindicarbonsäure-Einheiten der Formel (1):

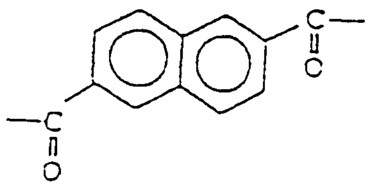

(1)

(b) 2 bis 35 Mol% Terephthalsäure-Einheiten der Formel (2):

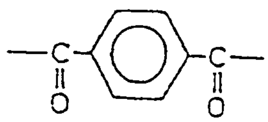

(2)

(c) 3 bis 40 Mol% 4,4'-Dihydroxydiphenyl-Einheiten der Formel (3):

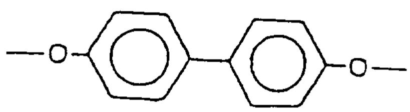

(3)

(d) 2 bis 40 Mol% mindestens einer der aromatischen Dioleinheiten der Formeln (4) bis (8):

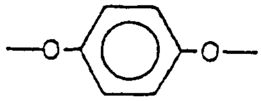

(4)

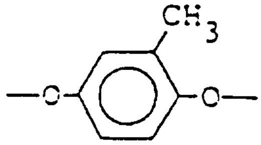

(5)

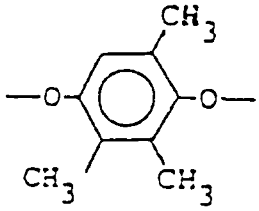

(6)

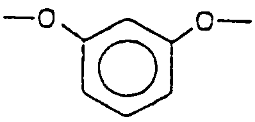

(7)

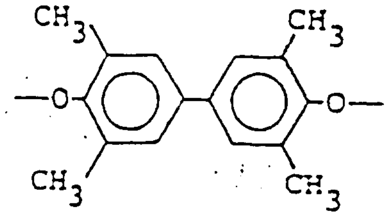

(8)

(e) 20 bis 80 Mol% p-Hydroxybenzoesäure-Einheiten der Formel (9):

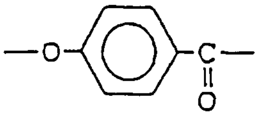

(9);

und (f) weniger als 3 Mol% andere Bestandteile;
worin, wenn die Stoffmengen der obigen Einheiten (1), (2), (3), (4), (5), (6), (7), (8) und (9) durch [1], [2], [3], [4], [5], [6], [7], [8] bzw. [9] dargestellt werden, jedes Mol% ein Wert auf der Basis von [1] + [2] + [3] + [4] + [5] + [6] + [7] + [8] + [9] ist.

**2.** Polyester gemäß Anspruch 1, welcher als aromatische Dioleinheit (d) 3 bis 25 Mol% mindestens einer der Einheiten (4) und (5) enthält.

**3.** Polyester gemäß Anspruch 1, welcher als aromatische Dioleinheit (d) 2 bis 20 Mol% der Einheit (8) enthält.

**4.** Polyester gemäß Anspruch 1, der als aromatische Dioleinheit (d) 2 bis 15 Mol% mindestens einer der Einheiten (6) und (7) enthält.

**5.** Polyester gemäß mindestens einem der vorangehenden Ansprüche, worin die Schmelzviskosität bei 320 °C und einer Scherrate von 100 $s^{-1}$ 100 Poise (10 Pa • s) oder mehr ist.

**6.** Polyester gemäß mindestens einem der vorangehenden Ansprüche, worin die Absolutwerte des komplexen Elastizitätsmoduls, gemessen mit einem Vibrometer bei 110 Hz, die folgenden Gleichungen erfüllen:

$$|E^*|_{150}/|E^*|_{40} \geq 1/3$$

$$|E^*|_{150} \geq 4{,}0 \times 10^{10}\ \text{dyn/cm}^2\ (4{,}0\ \text{GPa})$$

$$|E^*|_{40} \geq 8{,}0 \times 10^{10}\ \text{dyn/cm}^2\ (8{,}0\ \text{GPa})$$

worin $|E^*|_{40}$ und $|E^*|_{150}$ die Absolutwerte des bei 40 °C bzw. 150 °C gemessenen komplexen Elastizitätsmoduls sind.

**7.** Verfahren zur Herstellung eines Polyesters gemäß mindestens einem der vorangehenden Ansprüche, das umfasst:
Umsetzen der folgenden Verbindungen in der Gegenwart eines Säureanhydrids:

(g) 2 bis 40 Mol% 2,6-Naphthalindicarbonsäure der Formel (10):

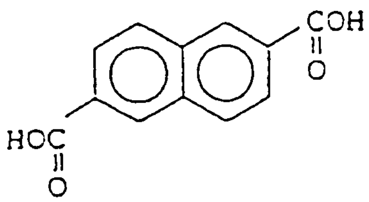

(10)

(h) 2 bis 35 Mol% Terephthalsäure der Formel (11):

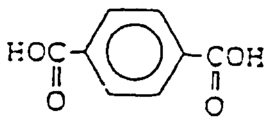

(11)

(i) 3 bis 40 Mol% 4,4-Dihydroxydiphenyl der Formel (12):

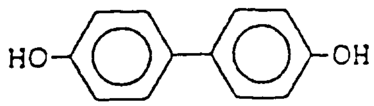

(12)

(j) 2 bis 40 Mol% mindestens einer der aromatischen Diolverbindungen der Formeln (13) bis (17):

(13)

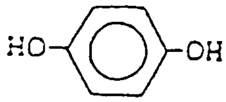

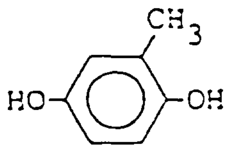

(14)

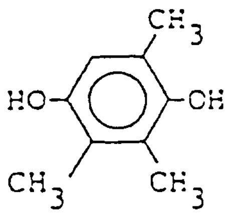

(15)

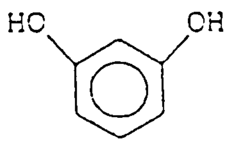

(16)

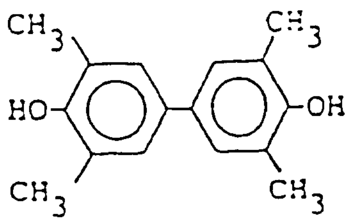

(17)

und

(k) 20 bis 80 Mol% p-Hydroxybenzoesäure der Formel (18):

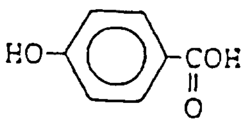

(18)

und (l) weniger als 3 Mol% andere Bestandteile;

worin, wenn die Stoffmengen der obigen Verbindungen (10), (11), (12), (13), (14), (15), (16), (17) und (18) durch [10], [11], [12], [13], [14], [15], [16], [17] bzw. [18] dargestellt werden, jedes Mol% ein Wert ist, der auf [10] + [11] + [12] + [13] + [14] + [15] + [16] + [17] + [18] basiert,
und anschließendes Umsetzen der Komponenten bei einer Temperatur von 100 bis 400 °C, während das Säureanhydrid und die daraus gebildeten Säuren entfernt werden.

**8.** Formteil, Film oder Faser, umfassend einen Polyester gemäß mindestens einem der Ansprüche 1 bis 6.

**Revendications**

**1.** Polyester aromatique ayant une viscosité à l'état fondu de 10 poises (1 Pas) ou plus à 320°C et à une vitesse de cisaillement de 100 $s^{-1}$, polyester qui consiste en :

(a) 2 à 40% en moles d'unités d'acide 2,6-naphtalènedicarboxylique de formule (1):

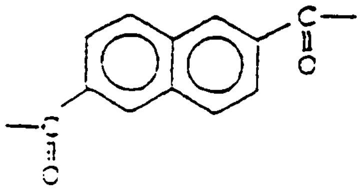

(1)

(b) 2 à 35% en moles d'unités d'acide téréphtalique de formule (2):

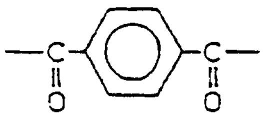

(2)

(c) 3 à 40% en moles d'unités 4,4'-dihydroxydiphényle de formule (3):

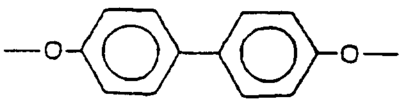

(3)

(d) 2 à 40% en moles d'au moins un élément choisi parmi les unités diol aromatique de formules (4) à (8):

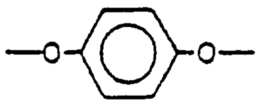

(4)

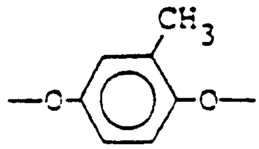

(5)

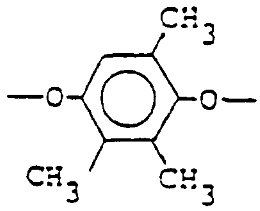

(6)

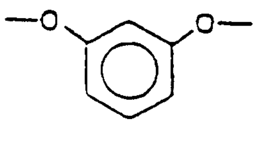

(7)

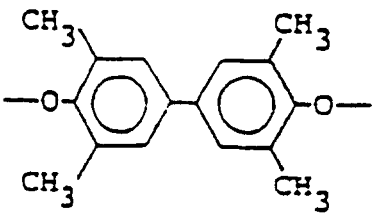

(8)

(e) 20 à 80% en moles d'unités d'acide p-hydroxybenzoïque de formule (9):

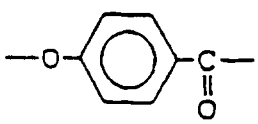

(9);

et

(f) moins de 3% en moles d'autres composants; dans lequel, quand les quantités molaires des unités ci-dessus (1), (2), (3), (4), (5), (6), (7), (8) et (9) sont représentées par [1], [2], [3], [4], [5], [6], [7], [8] et [9], chaque % en moles est respectivement une valeur basée sur [1] + [2] + [3] + [4] + [5] + [6] + [7] + [8] + [9].

**2.** Polyester selon la revendication 1, qui contient, comme unité diol aromatique (d), 3 à 25% en moles d'au moins une des unités (4) et (5).

**3.** Polyester selon la revendication 1, qui contient, comme unité diol aromatique (d), 2 à 20% en moles du motif (8).

**4.** Polyester selon la revendication 1, qui contient, comme unité diol aromatique (d), 2 à 15% en moles d'au moins un des motifs (6) et (7).

**5.** Polyester selon l'une quelconque des revendications précédentes, dans lequel la viscosité, à l'état fondu à 320°C et à une vitesse de cisaillement de 100 $s^{-1}$, est 100 poises (10 Pas) ou plus.

**6.** Polyester selon l'une quelconque des revendications précédentes, dans lequel les valeurs absolues de leur module élastique complexe, quand on le mesure avec un appareil Vibron à 110 Hz, satisfont les relations suivantes:

$$|E^*|_{150}/|E^*|_{40} \geq 1/3$$

$$|E^*|_{150} \geq 4{,}0 \times 10^{10}\ \text{dyne/cm}^2\ (4{,}0\ \text{GPa})$$

$$|E^*|_{40} \geq 8{,}0 \times 10^{10}\ \text{dyne/cm}^2\ (8{,}0\ \text{GPa})$$

dans lequel $|E^*|_{40}$ et $|E^*|_{150}$ sont les valeurs absolues du module élastique complexe mesuré respectivement à 40°C et 150°C.

**7.** Procédé pour produire un polyester tel que défini selon l'une quelconque des revendications précédentes, qui consiste à faire réagir, en présence d'un anhydride:

(g) 2 à 40% en moles d'acide 2,6-naphtalènedicarboxylique de formule (10):

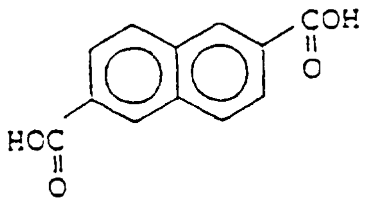

(10)

(h) 2 à 35% en moles d'acide téréphtalique de formule (11):

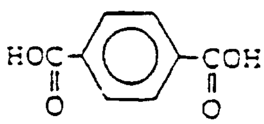

(11)

(i) 3 à 40% en moles de 4,4-dihydroxydiphényle de formule (12):

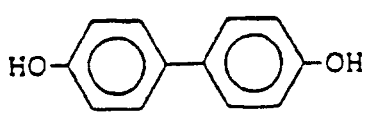

(12)

(j) 2 à 40% en moles d'au moins un élément choisi parmi les composés diols aromatiques de formules (13) à (17):

(13)

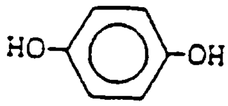

(14)

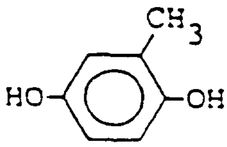

(14)

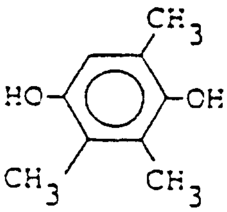

(15)

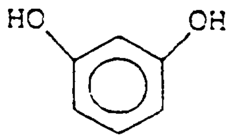

(16)

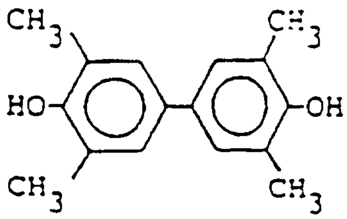

(17)

(k) 20 à 80% en moles d'acide p-hydroxybenzoïque de formule (18):

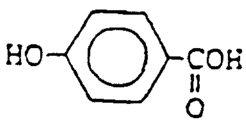

(18)

et

(l) moins de 3% en moles d'autres composants, dans lequel, quand les quantités molaires des composés ci-dessus (10), (11), (12), (13), (14), (15), (16), (17) et (18) sont représentées par [10], [11], [12], [13], [14], [15], [16], [17] et [18], chaque % en moles est respectivement une valeur basée sur [10] + [11] + [12] + [13] + [14] + [15] + [16] + [17] + [18],
et en faisant réagir de plus les composants à une température de 100 à 400°C tout en retirant l'anhydride et les acides formés à partir de ceux-ci.

**8.** Moulage, film ou fibre comprenant un polyester tel que défini selon l'une quelconque des revendications 1 à 6.

Fig. 1

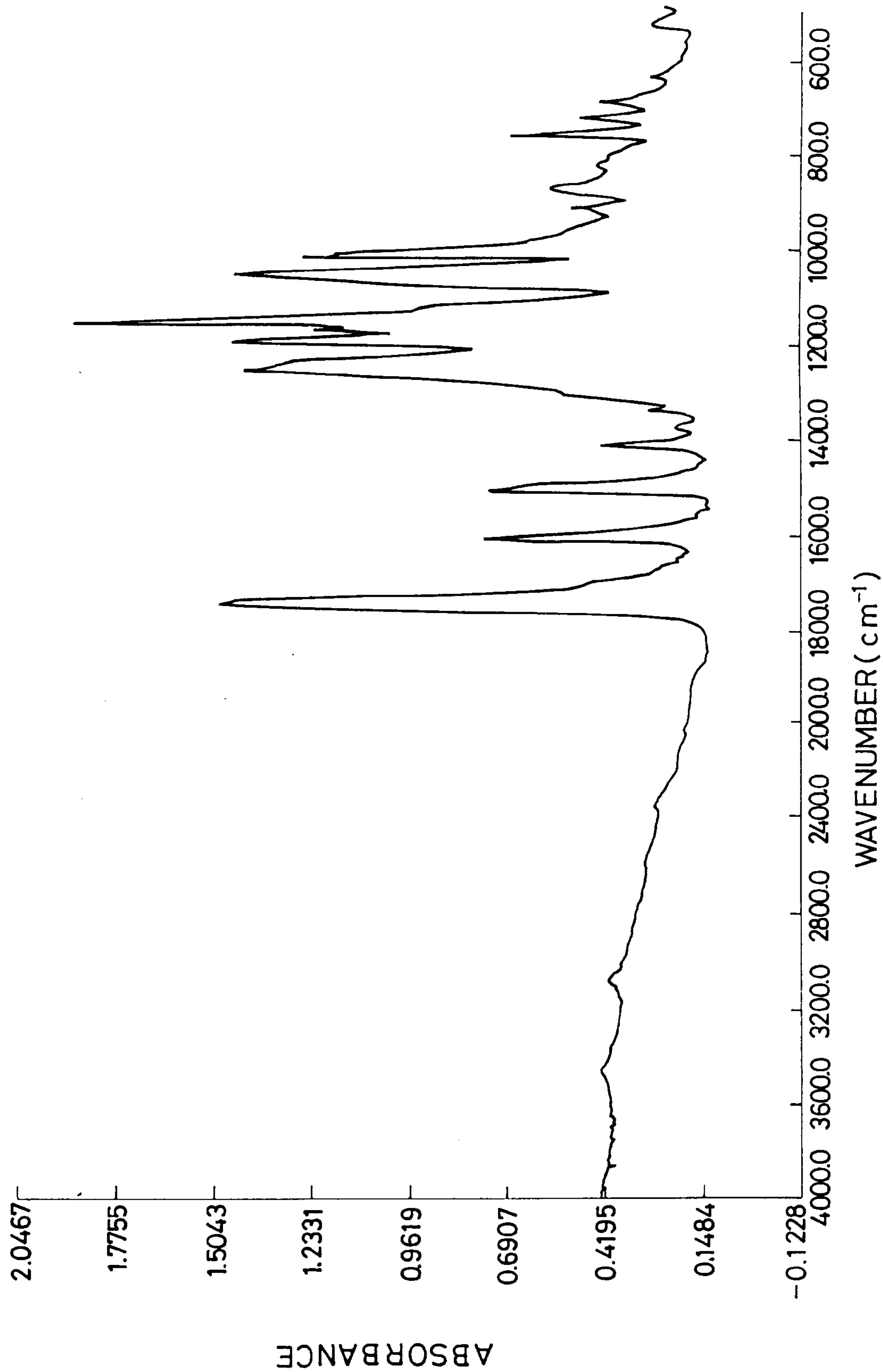
ABSORBANCE
2.0467
1.7755
1.5043
1.2331
0.9619
0.6907
0.4195
0.1484
−0.1228
4000.0
3600.0
3200.0
2800.0
2400.0
2000.0
1800.0
1600.0
1400.0
1200.0
1000.0
800.0
600.0
WAVENUMBER ( cm⁻¹ )

Fig. 2

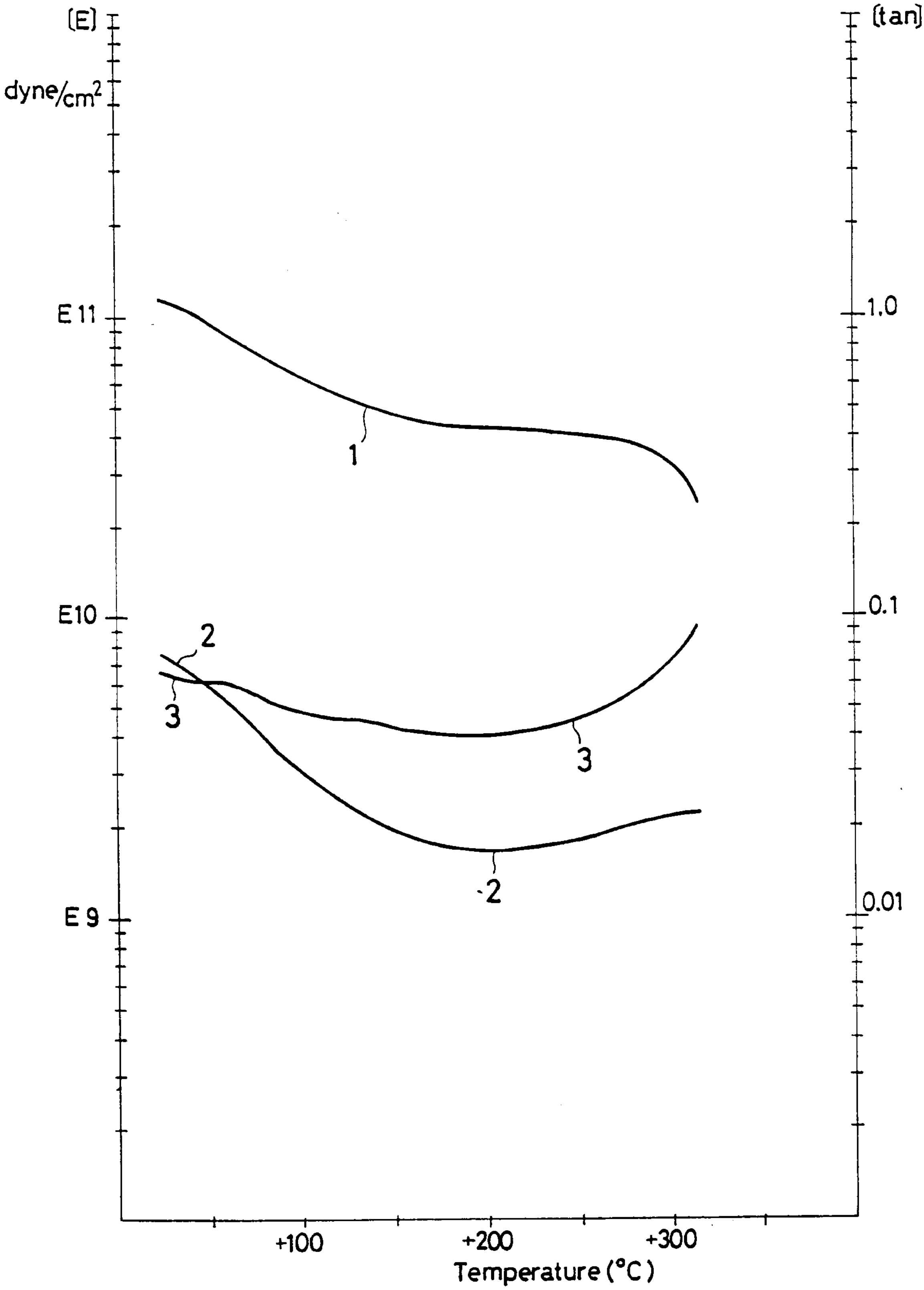
[E]
dyne/cm2
E 11
E10
E 9
[tan]
1.0
0.1
0.01
1
2
3
3
2
+100
+200
+300
Temperature (°C)

Fig. 3

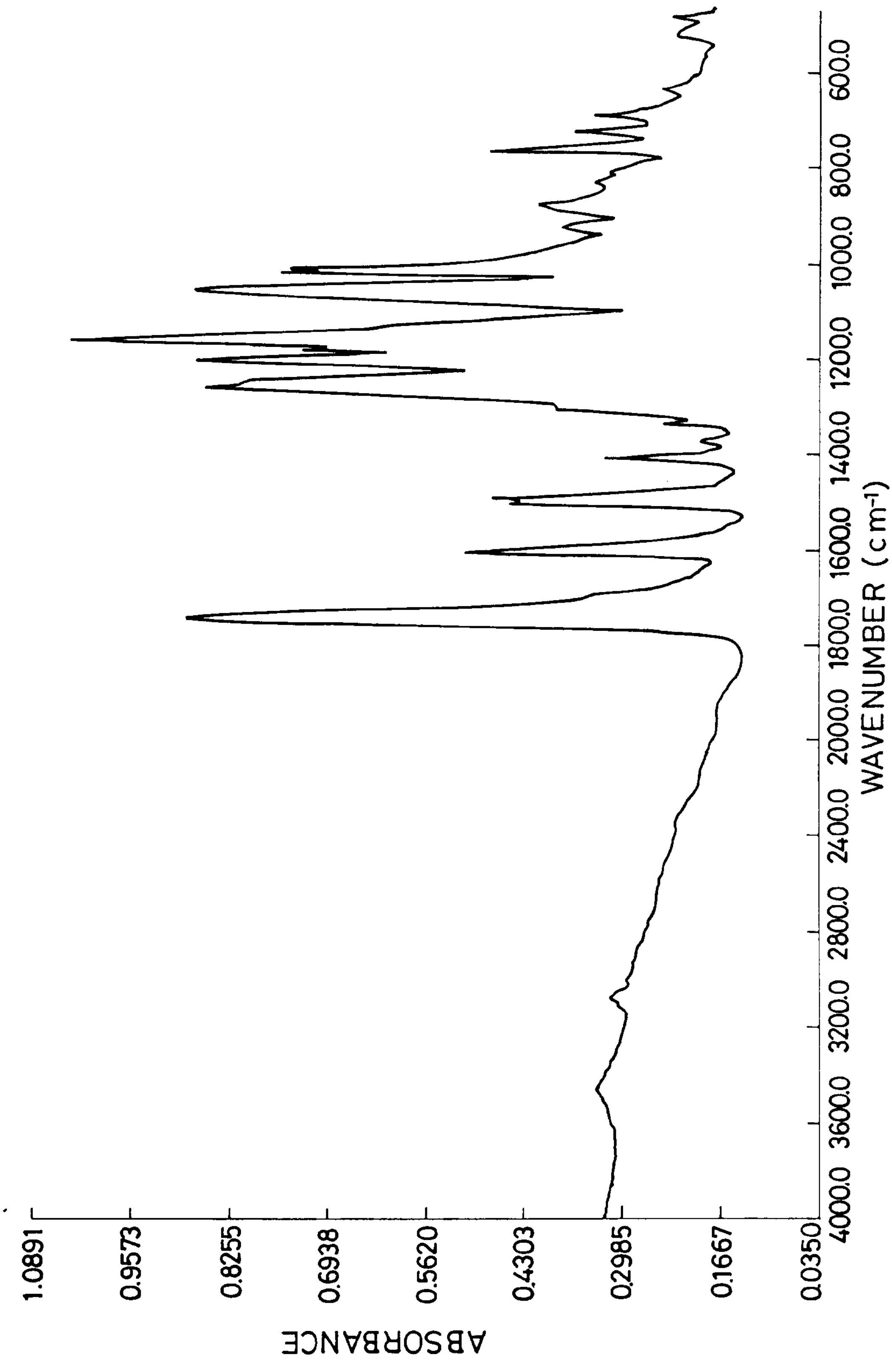
ABSORBANCE
1.0891
0.9573
0.8255
0.6938
0.5620
0.4303
0.2985
0.1667
0.0350
4000.0
3600.0
3200.0
2800.0
2400.0
2000.0
1800.0
1600.0
1400.0
1200.0
1000.0
800.0
600.0
WAVENUMBER (cm-1)

Fig. 4

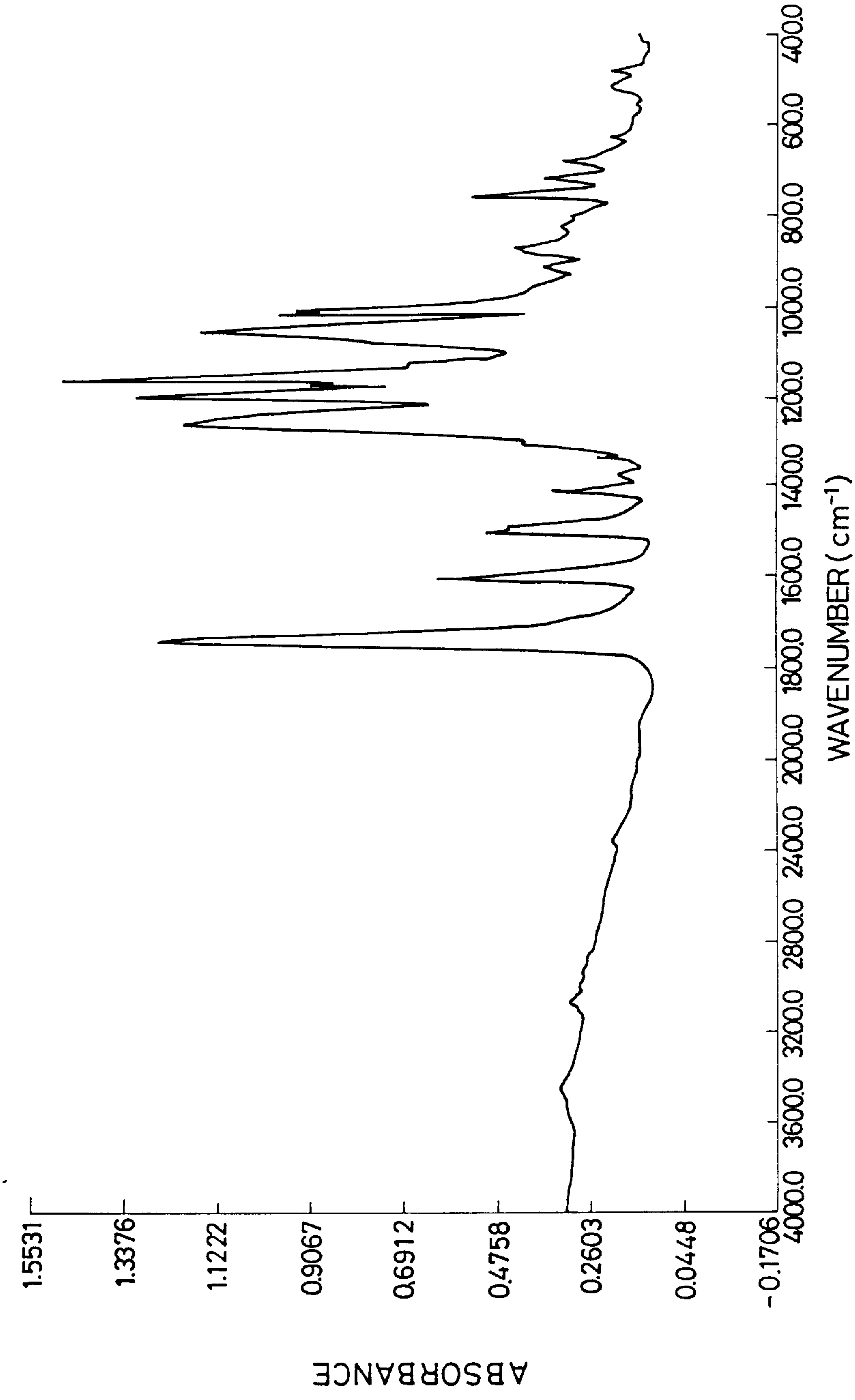
ABSORBANCE
1.5531
1.3376
1.1222
0.9067
0.6912
0.4758
0.2603
0.0448
-0.1706
4000.0
3600.0
3200.0
2800.0
2400.0
2000.0
1800.0
1600.0
1400.0
1200.0
1000.0
800.0
600.0
400.0
WAVENUMBER (cm⁻¹)